# EUROPEAN PATENT APPLICATION

(11) **EP 1 707 260 A1**
(43) Date of publication of application: **04.10.2006**
(21) Application number: 06251758.6
(22) Date of filing: 30.03.2006
(51) Int. Cl.: B01J 13/14

(54) **Method of preparing crosslinked collagen microspheres**

(30) Priority: 31.03.2005 US 95802
(71) Applicant: ETHICON, INC., Somerville, New Jersey 08876 (US)
(72) Inventor: Yang, Chunlin, Belle Mead, New Jersey 08502 (US); Timmer, Mark, Jersey City, New Jersey 07302 (US)
(74) Representative: James, Anthony Christopher W.P.

(57) **Abstract**

The present invention is drawn to methods of preparing crosslinked collagen microspheres and microparticles, where a solution of soluble collagen in an aqueous acidic medium is combined with an emulsifying agent to form a first mixture of the soluble collagen solution and the emulsifying agent, the first mixture then is combined with a hydrophobic liquid under conditions effective to form water-in-oil emulsion of the hydrophobic liquid and the first mixture, the water-in-oil emulsion then is added to a buffered alcohol solution under conditions effective to form a dispersion of a continuous liquid phase and a dispersed solid phase of collagen fibers reconstituted from the soluble collagen solution, the liquid phase then is removed from the dispersion to provide collagen microspheres, the collagen microspheres then are crosslinked to form crosslinked collagen microspheres, and the crosslinked collagen microspheres then are optionally dried to form crosslinked collagen microparticles.

## Description

### Field of the Invention

The present invention relates to processes for making crosslinked collagen microspheres and microparticles.

### Background of the Invention

Collagen is the major protein component of the extracellular matrix of all connective tissue, including skin, tendons, bones, cartilage, blood vessels and ligaments. Twenty-five types of collagen have been discovered by protein purification, by cDNA and genomic DNA libraries screening, and bioinformatics.

Type I collagen has been widely used as a biomaterial for biomedical applications for decades in such applications as injectable collagen formulations for soft tissue augmentation, hemostats for control of bleeding during surgery and after trauma, wound dressings and vascular graft coatings. It has also been used as biodegradable carrier for controlled release of chemotherapy drug and antibiotics.

Collagen gels seeded with fibroblasts have been used as the "dermal" layer of the artificial skin sold under the tradename APLIGRAFT (Sandoz AG, Basel, Switzerland), and collagen sponges have been used as an osteoconductive carrier of bone morphogenic protein-2 (BMP-2) for spine fusion and the treatment of long bone fractures.

Collagen based biomaterials have been formulated into fibers, film, sheets, sponges and dispersions of fibrils. Collagen formulations that are injected have particular advantage in surgery due to the ability to access tissues areas with minimally invasive surgical tools.

U.S. Pat. No. 4,488,911 discloses a method for producing collagen fibers that resemble native collagen fibers. The precipitated, reconstituted fibers may additionally be crosslinked using a chemical agent, for example aldehydes such as formaldehyde and glutaraldehyde, heat, or radiation.

Collagen fibril dispersions have been injected into the tissues around the urethral sphincter in the treatment of incontinence and also for the augmentation of soft tissues for cosmetic purposes. U.S. Pat. No. 4,776,890 discloses using collagen fibril dispersions for delivery of mineral particles for bone repair. Application of such dispersions for delivery of drugs into cellular lesion areas via injection was disclosed in U.S. Pat. No. 4,619,913 and Re. 35,738.

Crowdhury and Mitra ("Kinetics of in vitro release of a model nucleoside deoxyuridine from crosslinked insoluble collagen and collagen-gelatin microspheres", *International Journal of Pharmaceutics,* **193**:113 1999) have described a process to formulate collagen microparticles using insoluble collagen swollen in acidic solution. The dispersion of collagen was mixed with methylene chloride and emulsified by homogenization. The resultant emulsion was then poured into a PVA solution with constant stirring to allow methylene chloride to evaporate. The suspension of collagen was then crosslinked using glutaraldehyde.

Rossler B et al. ("Collagen microparticles: preparation and properties", *J Microencapsul.* **12**(1):49 1995) have disclosed a similar process for making collagen microparticles. Collagen dispersion was added into liquid paraffin. The mixture was emulsified and then glutaraldehyde **(?)** solution was added to crosslink the collagen. The isolated collagen microparticles were washed with 2-proponal.
U.S. Pat. No. 5,672,301 discloses a method to produce collagen microparticles through the chemical modification of the collagen while dispersed in an emulsion.
Acid soluble atelocollagen was rendered insoluble in its dispersed phase by the addition of an alkanization agent that is insoluble in the continuous phase of the emulsion.

While the art has disclosed processes for making injectable formulations of collagen as noted above, it has not disclosed process that may be used to prepare fibrillar collagen microparticles. The present invention provides a process to prepare fibrillar collagen microparticles that are able to fill and to be densely packed within irregular-shaped tissue defects and cavities while providing compositional characteristics similar to connective tissue extracellular matrix.

### Summary

The present invention is drawn to methods of preparing crosslinked collagen microspheres and microparticles from soluble collagen. As used herein, soluble collagen is that collagen that is completely dissolved in an acidic medium having a pH of about 4 or less, as opposed to insoluble collagen that is swellable, but not soluble, in the same aqueous medium. A solution of soluble collagen in an aqueous acid medium is prepared. The soluble collagen solution is combined with an emulsifying agent to form a first mixture of the soluble collagen solution and the emulsifying agent. The first mixture is combined with a hydrophobic liquid under conditions effective to form a water-in-oil emulsion comprising the soluble collagen solution and the hydrophobic liquid. The water-in-oil emulsion is added to a buffered alcohol solution under conditions effective to form a dispersion comprising a continuous liquid phase and a dispersed solid phase comprising collagen fibers reconstituted from the soluble collagen solution. The continuous liquid phase is then substantially removed from the dispersion, thus providing collagen microspheres. The collagen microspheres are then crosslinked and the crosslinked collagen microspheres are washed. The crosslinked collagen microspheres may further be dried to form crosslinked collagen microparticles and optionally modified to include minerals.

### Brief Description of the Figures

Figure 1 shows a light micrograph of washed crosslinked collagen microspheres.
Figure 2 shows a scanning electron micrograph (SEM) of crosslinked collagen microparticles prepared by freeze-drying.
Figure 3 shows a scanning electron micrograph (SEM) of mineralized collagen microparticles.

### Detailed Description of the Invention

In a method of preparing crosslinked collagen microspheres according to the present invention, a solution of soluble collagen dissolved in an aqueous acidic medium is prepared or otherwise provided and combined with an emulsifying agent. The solution is added to an appropriate hydrophobic liquid under conditions effective to form a water-in-oil emulsion. The emulsion is then added to a buffered alcohol solution with constant stirring, whereby the soluble collagen in the solution is reconstituted into collagen fibers via neutralization of the acidic medium by the buffered alcohol solution, and precipitated into microspheres. The continuous liquid phase of the emulsion is then evaporated to remove substantially all of the liquid phase. A crosslinking agent is added in order to crosslink the collagen microspheres. The crosslinked collagen microspheres are then washed with distilled water several times to remove any residues. The washed microspheres may then be dried to form crosslinked collagen microparticles, or preserved in water until further processing to microparticles at a later time.

The collagen used in the present invention can be any type of soluble collagen. In one embodiment, purified atelopeptides of type I animal collagen are used. Enzymes such as pepsin are applied to the collagen to remove the terminal telopeptides that may cause an immune response, thereby appreciably reducing the immunogenic property of the collagen. The collagen solution can then be reconstituted to collagen fibers under the conditions of the present invention as described herein.

In one embodiment, the collagen solution is prepared at a concentration of from about I to about 35 milligrams collagen per milliliter acidic medium for use. In another embodiment, the concentration may be 20 to 30 milligrams/milliliter. The aqueous acid medium has a pH in the range of about 1 to about 4. In one embodiment the medium is about 5 to about 100 milliMolar aqueous hydrochloric acid. Other suitable acids for preparation of the acidic solution include, but are not limited to, formic acid, acetic acid, propionic acid, lactic acid, malic acid, citric acid, ascorbic acid, oxalic acid, succinic acid, malonic acid, adipic acid, pyruvic acid, glutaric acid, tartaric acid, asparagic acid, epoxysuccinic acid, monochloroacetic acid, salicylic acid, itaconic acid, pyrrolidone carboxylic acid, glycolic acid, nitric acid, sulfuric acid and phosphoric acid.

An emulsifying agent is added to the collagen solution to form a first mixture containing the collagen solution and the emulsifying agent to facilitate formation of the water-in-oil emulsion. The concentration of the emulsifying agent may be within the range of about 0.1 to about 5 weight percent of the soluble collagen solution, or between 0.1 and 1 weight percent percent. Suitable emulsifying agents include, but are not limited to, polyvinyl alcohol, polyvinylpyrrolidone, sorbitan esters, polysorbates, polyoxyethylated glycol monoethers, polyoxyethylated alkyl phenols and poloxamers.

The first solution is added to a hydrophobic liquid under conditions effective to form a water-in-oil emulsion. Hydrophobic liquids that may be used include organic solvents that are immiscible with water. The liquids also should have relatively low boiling points to facilitate evaporation of the liquid during processes of preparing the crosslinked collagen microspheres and microparticles. Such organic solvents include, but are not limited to, methylene chloride and ethyl acetate. The volumetric ratio of hydrophobic liquid to collagen solution used in the invention can be within the range of about 1:1 to about 10:1, or about 2:1.

The water-in-oil emulsion of the present invention is formed by mechanical agitation of the hydrophobic liquid and the first mixture of collagen solution containing the emulsifying agent. Suitable mechanical force can be applied by mechanical stirring, i.e. homogenization, ultrasonic probes, or by passing the emulsion components through a narrow space, as in the case of colloidal mills, or through narrow tubes, valves, or other orifices. One emulsification technique used in the present invention is passing the emulsion components through a micro-emulsifying needle.

The buffered alcohol solution in the present invention is used to individualize and reconstitute the dissolved collagen from the water-in-oil emulsion into microspheres. The buffer component of the solution accomplishes the assembly of reconstituted collagen fibers into a spherical shape by neutralizing the pH of the acidic collagen solution within the emulsion. The buffer is prepared at a neutral pH and at a concentration for a high neutralizing capacity. Furthermore, the buffer is prepared with a salt, e.g. NaCl, to stabilize the collagen molecule. One buffer used in the invention is phosphate buffered saline at a concentration between 0.001 and 1 Molar phosphate buffer, with 0.01 to 0.3 Molar NaCl, and a pH between 6.5 and 7.5, or between 7.2 and 7.4. The alcohol component aids in stabilizing the spherical shape of the dispersed solid collagen phase in the liquid phase. The alcohol is miscible with both the hydrophobic liquid and the buffer. Suitable alcohols include, but are not limited to, ethanol, methanol, isopropanol, and mixtures thereof. The volume of buffer in the buffer/alcohol solution is 2 to 4 times that of alcohol.

The crosslinking agent in the present invention is used to crosslink the collagen in its spherical shape. Suitable crosslinking agents include, but are not limited to, formaldehyde, glutaraldehyde, chromium salts, di-isocyanates and the like.

In another embodiment of the present invention, the crosslinked collagen microspheres are subsequently lyophilized, or freeze-dried, to form irregular-shaped microparticles. As a result of the removal of water, these microparticles appear as crumpled, deflated spheres. The particles maintain their irregular shape after rehydration. This shape is particularly advantageous in the regeneration/repair of damaged tissue because of its large surface area to volume ratio. An agglomerate of such microparticles would form a three-dimensional structure with sufficient porosity and surface area to enable tissue infiltration and growth.

In yet another embodiment of the present invention, the collagen microparticles are further processed to immobilize calcium phosphate minerals within the collagen matrix. The resulting mineralized collagen microparticles would be suitable for the repair of bone defects. Mineralization of the collagen microparticles is achieved by the method described in U.S. Pat. No. 5,231,169. The calcium phosphate is formed in situ in a dispersion of collagen microparticles by the simultaneous gradual addition, preferably continuous addition, of a source of soluble calcium and a source of soluble phosphate. In addition to a source of calcium and phosphate, sources of other ions may be employed, such as carbonate, chloride, fluoride, sodium or ammonium. The nature of the calcium phosphate mineral may be varied widely, including calcium hydroxyapatite, calcium hydroxy/fluorapatite, brushite, dahlite, monetite, phosphated calcium carbonate (calcite), ostacalcium phosphate, tricalcium phosphate, where the choice of stoichiometry of the calcium and the phosphate, as well as the presence of other ions, will result in the particular composition. The mineral phase will usually have a Ca:P ratio of 1.2:1.8, hexagonal symmetry and be a member of the hydroxyapatite mineral group. The particle size of the mineral phase will be about 5 microns or less. The weight ratio of the collagen to calcium phosphate mineral will generally be in the range of about 4:1 to 1:1, and typically be about 7:3. The amount of collagen present in the mineralized product will generally be from about 80 percent to about 30 percent.

In still yet another embodiment of the present invention, an injectable, biodegradable filler for tissue repair or regeneration is composed of the collagen microparticles (mineralized or unmineralized), and a biocompatible liquid carrier. Ideal carriers for such devices are biodegradable and viscous. The liquid should be fluid enough so as to completely wet the particles. Carriers include, but are not limited to, hyaluronic acid, succinalyted collagen, carboxy methyl cellulose (CMC), gelatin, collagen gels, fibrinogen, thrombin, and polymers including liquid alkyd polyesters and liquid polyhydroxy compounds.

The injectable, biodegradable filler for tissue repair or regeneration may also include a bioactive agent. Examples of bioactive agents suitable for use with the present invention include cell attachment mediators, such as peptide-containing variations of the "RGD" integrin binding sequence known to affect cellular attachment, biologically active ligands, and substances that enhance or exclude particular varieties of cellular or tissue ingrowth. Examples of such substances include integrin binding sequence, ligands, bone morphogenic proteins, epidermal growth factor, IGF-I, IGF-II, TGF-beta I-III, growth differentiation factor, parathyroid hormone, vascular endothelial growth factor, hyaluronic acid, glycoprotein, lipoprotein, bFGF, TGF-beta superfamily factors, BMP-2, BMP-4, BMP-6, BMP-12, BMP-14 (also known as MP52), sonic hedgehog, GDF5, GDF6, GDF8, PDGF, small molecules that affect the upregulation of specific growth factors, tenascin-C, fibronectin, thromboelastin, thrombin-derived peptides, heparin-binding domains, and the like. Furthermore, the injectable material may comprise mineralized collagen particles mixed with a biologically derived substance selected from the group consisting of demineralized bone matrix (DBM), platelet rich plasma, bone marrow aspirate and bone fragments, all of which may be from autogenic, allogenic, or xenogenic sources.

In a further embodiment, the crosslinked collagen microparticles may act as a delivery vehicle for a cell-based therapy. Cells which can be seeded or cultured in the collagen microparticles of the current invention include, but are not limited to, bone marrow cells, mesenchymal cells, stromal cells, stem cells, embryonic stem cells, osteoblasts, precursor cells derived from adipose tissue, bone marrow derived progenitor cells, peripheral blood progenitor cells, stem cells isolated from adult tissue, and genetically transformed cells, or combinations of the above.

An embodiment of the present invention for the repair of bone tissue is the combination of the mineralized collagen particles and fresh bone marrow aspirate, whereby the marrow serves as a liquid carrier as well as a source of osteogenic growth factors and progenator cells.

Embodiments of the present invention can be readily prepared as needed. The crosslinked collagen microparticles can be pre-packed within a syringe to which the liquid carrier and bioactive agents can be added and mixed in a closed system. The preferred closed system is two syringes and a co-joining stopcock, whereby the collagen and liquid components are in separate syringes. The liquid components are added to the collagen-loaded syringe by passing it through the stopcock. After enabling the liquid carrier to adequately wet the crosslinked collagen microparticles, they can be further mixed by passing the paste back and forth between the two syringes. These embodiments can be prepared and packaged in sterile conditions for later use. In certain cases, the embodiments would not include cellular material that can expire over time. Such embodiments would consist of the crosslinked collagen microparticles and the liquid carrier containing cytokines or gene constructs.

### Examples

### Example 1 -Crosslinked Collagen Microspheres

10 percent (v/v) 200 milliMolar NaH₂PO₄ (pH 11.2) was added to a 2.9 milligram/milliliter collagen solution sold under the tradename VITROGEN (Cohesion Technologies Inc., Palo Alto, CA), whereby solid soluble collagen was precipitated out of the collagen solution. The solid collagen was isolated by centrifuging and washing with deionized water. 1 Molar HCl and a sufficient amount of water was added to the solid collagen soluble collagen to dissolve the soluble collagen in the aqueous medium provided by the water/HCL to provide a soluble collagen solution having a concentration of 30 milligram/milliliter soluble collagen and 20 milliMolar HCl. A 0.44 milliliter volume of 10 percent polyvinyl alcohol (PVA) solution (PVA M_{w} 30,000-70,000, Sigma, St Louis, MO) was added as an emulsifying agent to 4 milliliter of the soluble collagen solution to obtain a PVA concentration of about 1 percent (w/v). The mixture of the soluble collagen solution and PVA emulsifying agent was loaded into a glass syringe.

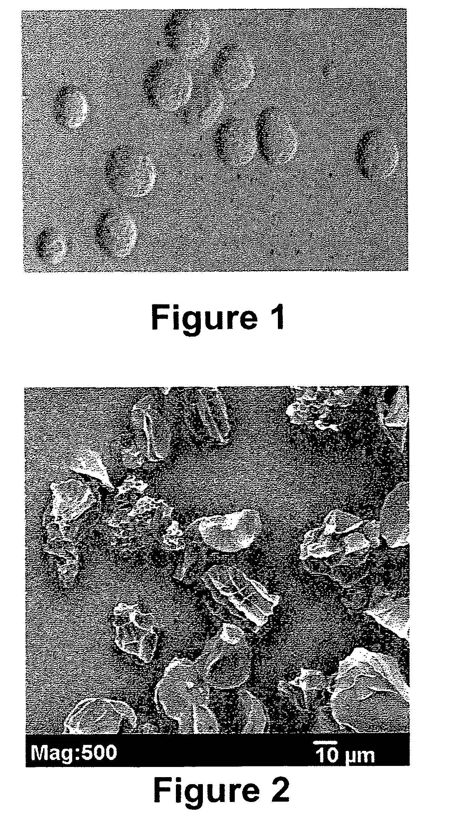

An 8 milliliter volume of methylene chloride was loaded into another glass syringe. A 16 gage, 73 millimeter micro-emulsifying needle (Popper & Sons Inc., New Hyde Park, NY) was connected between the two syringes. An emulsion of spherical microspheres was formed by passing the mixture back and forth between the syringes. Passing the material back and forth 10 cycles was sufficient to form the emulsion. The needle was disconnected from the syringe and the emulsion was then immediately injected into a constantly stirring 100 milliliter solution of phosphate buffered saline (PBS) with 50 percent ethanol (pH 7.4). After 5 minutes, 0.25 milliliter of glutaraldehyde solution (50 percent in water, Sigma, St Louis, MO) was added to the bath to crosslink the collagen microspheres. After 4 hours, the crosslinnked microspheres were centrifuged and washed with deionized water two times. The microspheres were stored in water and kept at 4°C. Figure 1 shows a light micrograph of the washed crosslinked collagen microspheres formed by the process of the present example.

### Example 2 - Crosslinked Collagen Microparticles

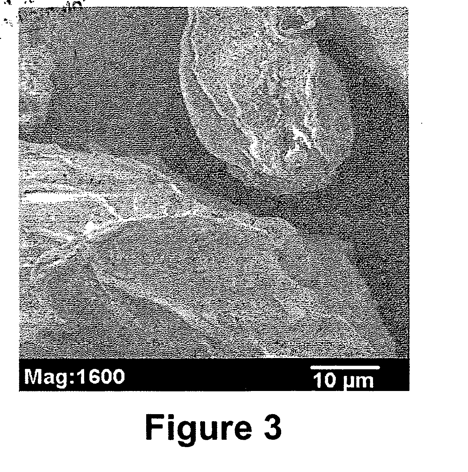

The collagen microspheres of Example 1 were freeze-dried with a laboratory scale lyophilizor (Dura-Stop/Dura-Dry Freeze Drying System, FTS Systems, Stoneridge, NY). The freeze-drying cycle was as follows: The particle dispersion was quenched with dry ice to flash-freeze the dispersion. The particles were then placed into a -40°C pre-cooled freeze-dryer for 1 hour. A vacuum of 100 mT was applied to the chamber. The particles were then dried at -40°C for 3 hours, -25°C for 24 hours, -15°C for 3 hours, -5°C for 3 hours, 5°C for 4 hours, and 20°C for 1 hour. Figure 3 shows a scanning electron micrograph of the irregularly-shape crosslinked collagen microparticles.

### Example 3 - Mineralization of Crosslinked Collagen Microspheres

A dispersion of 500 milligrams of crosslinked collagen microspheres made as described in Example 1 in 200 milliliters of deionized water was transferred into a 500 milliliter reactor vessel. The pH of the dispersion was adjusted to 11.4 with a 1 N sodium hydroxide solution. Calcium chloride and sodium phosphate were added to the vessel at a rate of 0.11 and 0.09 gram/min, respectively, over a period of 16 hours. During the addition, the pH was maintained at 11.4 ± 0.2 with a 1 N sodium hydroxide solution and a peristaltic pump with pH controller (Expert pump, SciLog, Middleton, WI). The slurry was then sieved through a 75 micron mesh and repeatedly rinsed with deionized water until the dispersion conductivity, as measured with a conductivity meter (Orion 115A+, Thermo Electron Corporation, Beverly, MA) was below 50 microSiemen.

The microspheres were subsequently freeze-dried using the cycle described in Example 2. Figure 3 shows a scanning electron micrograph of mineralized crosslinked collagen microparticles. EDX analysis of the mineralized particles indicated the presence of calcium phosphate on the collagen matrix.

## Claims

1. A method to prepare crosslinked collagen microspheres, comprising
providing a solution of soluble collagen in an aqueous acidic medium,
combining the collagen solution with an emulsifying agent to form a first mixture thereof,
combining the first mixture with a hydrophobic liquid under conditions effective to form a water-in-oil emulsion comprising the first mixture and the hydrophobic liquid,
adding the water-in-oil emulsion to a buffered alcohol solution under conditions effective to form a dispersion comprising a first continuous liquid phase and a second dispersed solid phase comprising collagen fibers reconstituted from the soluble collagen solution,
substantially removing the liquid phase from the dispersion to provide collagen microspheres; and
crosslinking the collagen microspheres to form crosslinked collagen microspheres;

2. The method of claim 1 wherein the soluble collagen comprises purified atelopeptides of type I collagen.

3. The method of claim 1 wherein the aqueous acid medium comprises an acid selected from the group consisting of formic acid, acetic acid, propionic acid, lactic acid, malic acid, citric acid, ascorbic acid, oxalic acid, succinic acid, malonic acid, adipic acid, pyruvic acid, glutaric acid, tartaric acid, asparagic acid, epoxysuccinic acid, monochloroacetic acid, salicylic acid, itaconic acid, pyrrolidone carboxylic acid, glycolic acid, nitric acid, sulfuric acid, phosphoric acid and hydrochloric acid.

4. The method of claim 1 wherein the emulsifying agent is selected from the group consisting of polyvinyl alcohol, polyvinylpyrrolidone, sorbitan esters, polysorbates, polyoxyethylated glycol monoethers, polyoxyethylated alkyl phenols and poloxamers.

5. The method of claim 1 where the hydrophobic liquid is selected from the group consisting of methylene chloride and ethyl acetate.

6. The method of claim 1 wherein the alcohol is selected from the group consisting of ethanol, methanol and isopropanol.

7. The method of claim 1 wherein the crosslinking agent is selected from the group consisting of formaldehyde, glutaraldehyde, chromium salts and di-isocyanates.

8. The method of claim 1 wherein the crosslinked collagen microspheres are washed.

9. The method of claim 1 wherein the crosslinked collagen microspheres are dried to form crosslinked collagen microparticles.

10. The method of claim 9 wherein drying is accomplished by freeze-drying.

11. The method of claim 1 wherein the crosslinked collagen microspheres are dispersed in water comprising a source of soluble calcium ion and a source of soluble phosphate to form mineralized crosslinked collagen microspheres.

12. The method of claim 11 wherein the mineralized crosslinked microspheres are washed.

13. The method of claim 11 wherein the mineralized crosslinked collagen microspheres are dried to form mineralized crosslinked microparticles.

14. The method of claim 13 wherein drying is accomplished by freeze-drying.

15. The method of claim 1 wherein the pH of the aqueous acidic medium is from about 1 to about 4.

16. The method of claim 1 wherein the soluble collagen solution comprises from about I to about 35 milligrams soluble collagen per milliliter aqueous acidic medium.

17. The method of claim 1 wherein the volumetric ratio of the hydrophobic liquid to the collagen solution in the water-in-oil emulsion is from about 1:1 to about 10:1.ratio
